# EUROPÄISCHE PATENTSCHRIFT

(11) **EP 1 149 738 B1**
(45) Veröffentlichungstag und Bekanntmachung des Hinweises auf die Patenterteilung: **22.03.2006**
(21) Anmeldenummer: 01108429.0
(22) Anmeldetag: 04.04.2001
(51) Int. Cl.: B60R 16/02

(54) **Zentralelektrik für ein Kraftfahrzeug**
Motor vehicle electrical distribution centre
Centrale électrique pour un véhicule à moteur

(30) Priorität: 29.04.2000 DE 10021217
(43) Veröffentlichungstag der Anmeldung: 31.10.2001
(73) Patentinhaber: Hella KGaA Hueck & Co., 59552 Lippstadt (DE)
(72) Erfinder: Münsterweg, Bernd, 59329 Liesborn (DE); Scheibe, Winfried, 59557 Lippstadt (DE); Rüther, Georg, 33165 Liesborn (DE)

(56) Entgegenhaltungen:
- DE-A- 3 050 444
- DE-A- 4 422 434
- DE-C- 3 608 752
- DE-C- 19 713 008
- US-A- 5 771 151

## Beschreibung

Die vorliegende Erfindung betrifft eine Zentralelektrik für ein Kraftfahrzeug umfassend ein Gehäuse, in dem mindestens eine aus Stegleitern gebildete Leiterbahnebene und eine im wesentlichen senkrecht zu der Leiterbahnebene*ausgerichtete, mit dieser über mindestens einen der Stegleiter elektrisch leitend verbundene Leiterplatte angeordnet sind, wobei die Leiterplatte mindestens ein elektronisches Bauteil trägt.

Derartige Zentralelektriken werden als Schnittstellen von in Kraftfahrzeugen vorhandenen Elektriksystemen eingesetzt, wobei in einer derartigen Zentralelektrik Hochstromkomponenten mit Logikbaugruppen verknüpft sind. Die Hochstromkomponenten werden in den durch die Stegleiter gebildeten Leiterbahnebenen geführt, wohingegen die Logikbaugruppen in der Regel auf der Leiterplatte angeordnet sind. Eine derartige Zentralelektrik kann Steckplätze für Relais und Sicherungen sowie Anschlußmöglichkeiten für mit elektrischen Kupplungsorganen versehene Kabelbäume aufweisen.

Eine Zentralelektrik der eingangs genannten Art ist aus der deutschen Patentschrift DE 44 22 434 Cl bekannt. Bei der darin beschriebenen Zentralelektrik sind mehrere parallel zueinander ausgerichtete, voneinander beabstandete Leiterbahnebenen mittels Steckkontakten mit der Leiterplatte verbunden. Das Vorsehen derartiger Steckverbindungen zwischen Leiterplatte und Leiterbahnebenen erweist sich als relativ aufwendig. Als zusätzlicher Nachteil bei einer aus der DE 44 22 434 C1 bekannten Zentralelektrik erweist sich, daß die Leiterplatte über elektrisch leitende Verbindungen mit Anschlußeinheiten verbunden ist, die reine Signal- bzw. Steuerein- und/oder -ausgänge sind. Gleichzeitig gehen von den Leiterbahnebenen Stegleiter aus, die mit Anschlußeinheiten verbunden sind, die Ein- und/oder Ausgänge für Hochstromkomponenten bilden. Auf diese Weise muß jede externe Einrichtung von der Zentralelektrik über zwei separate Anschlußeinheiten kontaktiert werden.

Aus der deutschen Patentschrift DE 197 13 008 Cl ist eine Zentralelektrik bekannt, bei der parallel zu einer Anzahl von Leiterbahnebenen eine Leiterplatte angeordnet ist, die mit einer oder mehreren der Leiterbahnebenen über Lötpins verlötet ist. Diese Leiterplatte ist jedoch nicht mit elektronischen Bauelementen bestückt und kann somit nicht die elektronischen Funktionen der Zentralelektrik hinsichtlich Steuerung und Signalverarbeitung erfüllen. Vielmehr dient diese Leiterplatte als weitere Entflechtungsebene.

Das der vorliegenden Erfindung zugrunde liegende Problem ist die Schaffung einer Zentralelektrik der eingangs genannten Art, die effektiver aufgebaut ist.

Dies wird erfindungsgemäß dadurch erreicht, daß der mindestens eine die Leiterbahnebene mit der Leiterplatte verbindende Stegleiter an der Leiterplatte verlötet ist und dass an dem Gehäuse Anschlußeinheiten ausgebildet sind, in denen sowohl mindestens ein direkt mit der mindestens einen Leiterbahnebene elektrisch leitend verbundenes Kontaktelement als auch mindestens ein direkt mit der Leiterplatte elektrisch leitend verbundenes Kontaktelement für die Verbindung mit einem entsprechenden Anschlußstück vorgesehen ist. Dadurch ergibt sich ein einfacherer Aufbau als bei der Verwendung von Steckkontakten zwischen Leiterbahnebenen und Leiterplatte. Durch das Zusammenführen von von den Leiterbahnebenen ausgehenden Verbindungen mit von der Leiterplatte ausgehenden Verbindungen in einer Anschlußeinheit ergibt sich die Möglichkeit, eine externe Einrichtung vermittels eines einzelnen Anschlußsteckers oder dergleichen mit der Zentralelektrik zu verbinden.

Vorteilhafterweise kann dabei der mindestens eine an der Leiterplatte verlötete Stegleiter in Form eines Lötpins ausgeführt sein.

Gemäß einer bevorzugten Ausführungsform der vorliegenden Erfindung weist der mindestens eine mit der Leiterplatte verlötete Stegleiter im Bereich der Lötverbindung mit der Leiterplatte einen bogenförmigen oder mäanderförmigen Abschnitt auf, der vergleichsweise biegeweich ist. Es zeigt sich, daß durch die unterschiedlichen Ausdehnungskoeffizienten von Kunststoffen und Metallen bei der Erwärmung einzelner Stegleiter oder des gesamten Gehäuses Spannungen im Bereich der Lötstellen zwischen den aus Metall ausgeführten Stegleitern und der aus Kunststoff ausgeführten Leiterplatte auftreten können. Durch das Vorsehen eines biegeweichen Bereiches des Steigleiters in der Nähe der Lötstelle können diese Spannungen minimiert werden.

Hierbei können die Kontaktelemente beispielsweise als Messerkontakte oder als Aufpreßzonen für einen Federkontakt ausgeführt sein.

Gemäß einer bevorzugten Ausführungsform der vorliegenden Erfindung umfaßt das Gehäuse eine Kunststoffleiste, in der mindestens ein Anschlußdraht derart montiert ist, daß sein eines Ende eines der Kontaktelemente kontaktiert und sein anderes Ende etwa in der gleichen Ebene wie der mindestens eine als Lötpin ausgeführte Stegleiter positioniert und wie dieser mit der Leiterplatte verlötet ist. Vermittels einer derartigen Kunststoffleiste läßt sich die Herstellung der erfindungsgemäßen Zentralelektrik vereinfachen, da in einem ersten Arbeitsgang die entsprechenden vorgenannten Anschlußdrähte vormontiert werden können und in einem zweiten Arbeitsgang mit den Kontaktelementen bzw. der Leiterplatte verbunden werden können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Teilansicht eines Querschnitts durch eine erfindungsgemäße Zentralelektrik;
- Fig. 2: eine schematische Detailansicht der Kontaktierung einer Leiterplatte der Zentralelektrik mittels eines Stegleiters.

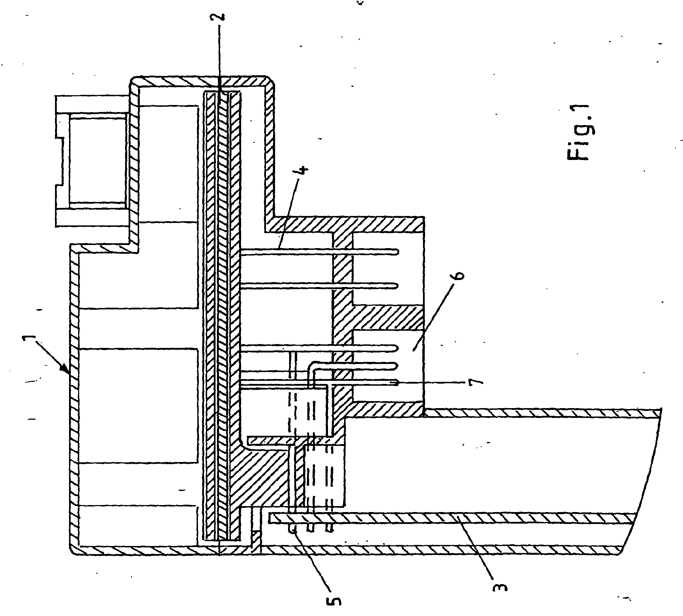

Wie aus Fig. 1 ersichtlich ist umfaßt die beispielhaft dargestellte Ausführungsform einer erfindungsgemäßen Zentralelektrik ein Gehäuse 1, indem mehrere parallel zueinander ausgerichtete, voneinander beabstandete Leiterbahnebenen 2 angeordnet sind. Die Leiterbahnebenen 2 sind jeweils als Stanzgitter oder Stanzpakete aus Stegleitern gebildet.

Weiterhin ist in dem Gehäuse 1 etwa senkrecht zu den Leiterbahnebenen 2 eine Leiterplatte 3 angeordnet, auf der in der Regel eine Vielzahl von elektronischen Bauteilen vorgesehen ist. Aus_den Leiterbahnebenen 2 sind rechtwinklig Stegleiter 4, 5 herausgebogen, von denen der mit dem Bezugszeichen 5 bezeichnete Stegleiter ein zweites mal um 90 Grad gebogen und in Form eines Lötpins durch die Leiterplatte 3 hindurchgeführt und mit dieser verlötet ist.

Aus Fig. 1 ist weiterhin ersichtlich, daß an dem Gehäuse Anschlußeinheiten 6 ausgebildet sind, die in Form von Steckerkörben eine Aufnahme für entsprechende Steckerelemente darstellen, um eine leitende Verbindung zu externen Einrichtungen herzustellen. In den Anschlußeinheiten 6 sind sowohl direkt von den Leiterbahnebenen 2 ausgehende Stegleiter 4 mit Kontaktelementen 7 verbunden, als auch von der Leiterplatte 3 ausgehende Leiter. In dem abgebildeten Ausführungsbeispiel sind die Kontaktelemente 7 als Messerkontakte ausgeführt.

Für die Verbindung der Kontaktelemente 7 mit der Leiterplatte 3 kann vorgesehen sein, daß in dem Gehäuse eine Kunststoffleiste angebracht ist, die mindestens einen, vorzugsweise jedoch mehrere Anschlußdrähte derart haltert, daß jeweils das eine Ende eines der Drähte mit einem der Kontaktelemente 7 verbunden ist und das andere Ende eines jeden der Drähte etwa in der gleichen Ebene wie die als Lötpins ausgeführten Stegleiter 5 positioniert und zusammen mit diesen mit der Leiterplatte 3 verlötet sind.

Alternativ zu der Ausbildung der Kontaktelemente 7 als Messerkontakte können diese auch als Aufpreßzone für einen Federkontakt ausgebildet sein. Aus Fig. 1 ist ersichtlich, daß sowohl an der Unterseite des Gehäuses als auch an der Oberseite des Gehäuses als Steckerkörbe ausgebildete Anschlußeinheiten vorgesehen sein können.

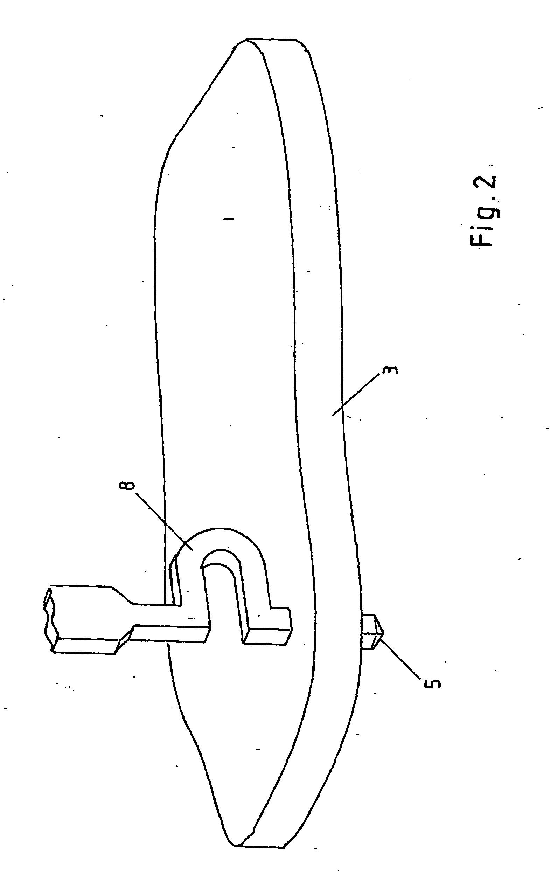

Aus Fig. 2 ist detailliert die Anbringung des als Lötpins ausgeführten Stegleiters 5 an der Leiterplatte 3 ersichtlich. Kurz vor der Hindurchführung des Stegleiters 5 durch die Leiterplatte 3 weist dieser einen Abschnitt 8 auf, der bogenförmig bzw. mäanderförmig ausgebildet ist. Aufgrund dieses Abschnittes 8 ergibt sich ein biegeweicher Bereich des Stegleiters 5 direkt oberhalb der Lötstelle mit der Leiterplatte 3.

## Patentansprüche

1. Zentralelektrik für ein Kraftfahrzeug umfassend ein Gehäuse (1), in dem mindestens eine aus Stegleitern gebildete Leiterbahnebene (2) und eine im wesentlichen senkrecht zu der Leiterbahnebene (2) ausgerichtete, mit dieser über mindestens einen der Stegleiter (5) elektrisch leitend verbundene Leiterplatte (3) angeordnet sind, wobei die Leiterplatte (3) mindestens ein elektronisches Bauteil trägt, **dadurch gekennzeichnet, daß** der mindestens eine die Leiterbahnebene (2) mit der Leiterplatte (3) verbindende Stegleiter (5) an der Leiterplatte (3) verlötet ist und dass in dem Gehäuse (1) Anschlußeinheiten (6) ausgebildet sind, in denen sowohl mindestens ein direkt mit der mindestens einen Leiterbahnebene (2) elektrisch leitend verbundenes Kontaktelement (7), als auch mindestens ein direkt mit der Leiterplatte (3) elektrisch leitend verbundenes Kontaktelement (7) für die Verbindung mit einem entsprechenden Anschlußstück vorgesehen ist.

2. Zentralelektrik nach Anspruch 1, **dadurch gekennzeichnet, daß** in dem Gehäuse (1) mindesten zwei zueinander parallele Leiterbahnebenen (2) beabstandet zueinander angeordnet sind.

3. Zentralelektrik nach einem der Ansprüche 1 oder 2, **dadurch gekennzeichnet, daß** der mindestens einer an der Leiterplatte (3) verlötete Stegleiter (5) in Form eines Lötpins ausgeführt ist.

4. Zentralelektrik nach einem der Ansprüche 1 bis 3, **dadurch gekennzeichnet, daß** der mindestens eine mit der Leiterplatte (3) verlötete Stegleiter (5) im Bereich der Lötverbindung mit der Leiterplatte (3) einen bogenförmigen oder mäanderförmigen Abschnitt (8) aufweist, der vergleichsweise biegeweich ist.

5. Zentralelektrik nach einem der Ansprüche 1 bis 4, **dadurch gekennzeichnet, daß** die Kontaktelemente (7) als Messerkontakte oder als Aufpreßzone für einen Federkontakt ausgebildet sind.

6. Zentralelektrik nach einem der Ansprüche 1 bis 5, **dadurch gekennzeichnet, daß** das Gehäuse (1) eine Kunststoffleiste umfaßt, in der mindestens ein Anschlußdraht derart montiert ist, daß sein eines Ende eines der Kontaktelemente (7) kontaktiert und sein anderes Ende etwa in der gleichen Ebene wie der mindestens eine als Lötpin ausgeführte Stegleiter (5) positioniert und wie dieser mit der Leiterplatte (3) verlötet ist.

## Claims

1. Central electrics for a motor vehicle, comprising a casing (1) in which is arranged at least one circuitboard level (2) formed of conductor strips, and a circuitboard (3) which is essentially oriented perpendicularly to the circuitboard level (2) and in an electrically conducting manner connected thereto via at least one conductor strip (5), and the circuitboard (3) carries at least one electronic component, **characterised in that** the at least one conductor strip (5), which connects the circuitboard level (2) to the circuitboard (3), is soldered onto the circuitboard (3), and in the casing (1) are arranged connecting units (6) wherein is provided both at least one contact element (7), which is in an electrically conducting manner directly connected to the circuitboard level (2), and at least one contact element (7), which is in an electrically conducting manner connected to the circuitboard (3), for connection to a corresponding connecting component.

2. Central electrics according to Claim 1, **characterised in that** in the casing (1) are arranged at least two spaced parallel circuitboard levels (2).

3. Central electrics according to one of Claims 1 or 2, **characterised in that** the at least one conductor strip (5) which is soldered onto the circuitboard (3) is designed as a soldering pin.

4. Central electrics according to one of Claims 1 to 3, **characterised in that** the at least one conductor strip (5) which is soldered to the circuitboard (3) has in the area of the solder connection to the circuitboard (3) an arced or meandering section (8) which is comparably flexurally soft.

5. Central electrics according to one of Claims 1 to 4, **characterised in that** the contact elements (7) are designed as knife contacts or as a press-on zone for a spring contact.

6. Central electrics according to one of Claims 1 to 5, **characterised in that** the casing (1) includes a plastic ledge wherein at least one connecting wire is mounted in such a manner that its one end makes contact with one of the contact elements (7), and its other end is positioned at approximately the same level as the at least one conductor strip (5) in the form of a soldering pin and soldered like the latter to the circuitboard 3.

## Revendications

1. Unité électrique centrale pour un véhicule automobile, comprenant un boîtier (1), dans lequel sont disposés au moins un plan (2) de voies conductrices formé par des conducteurs plats, et une plaquette à circuits imprimée (3), qui est orientée essentiellement perpendiculairement au plan (2) des voies conductrices et est reliée d'une manière électriquement conductrice à ce plan par l'intermédiaire d'au moins l'un des conducteurs plats (5), la plaquette à circuits imprimés (3) portant au moins un composant électronique **caractérisée en ce que** le au moine un conducteur plat (5), qui relie le plan (2) de voies conductrices à la plaquette à circuits imprimés (3), est fixé par brasage à la plaquette à circuits imprimés (3) et que dans le boîtier (1) sont formées des unités de raccordement (6) dans lesquelles sont prévus aussi bien un élément de contact (7) relié directement de façon électriquement conductrice au au moins un plan (2) de voies conductrices, qu'au moins un élément de contact (7) relié directement de façon électriquement conductrice à la plaquette à circuit imprimés (3) pour la liaison avec un élément de raccordement correspondant.

2. Unité électrique centrale selon la revendication 1, **caractérisée en ce qu'**au moins deux plans (2) de voies conductrices parallèles entre eux sont disposés à distance l'un de l'autre dans le boîtier (1).

3. Unité électrique centrale selon l'une des revendications 1 ou 2, **caractérisée en ce que** le au moins un conducteur (5) fixé par brasage A la plaquette à circuits imprimés (3) est agencé sous la forme d'une broche à souder.

4. Unité électrique centrale selon l'une des revendications 1 à 3, **caractérisée en ce que** le au moins un conducteur plat (5) fixé par brasage à la plaquette à circuits imprimés (3) comporte, dans la zone de la liaison bradée avec la plaquette à circuits imprimée (3), une partie de forme coudée ou sinueuse (8), qui fléchit comparativement aisément.

5. Unité électrique centrale selon l'une des revendications 1 à 4, **caractérisée en ce que** les éléments de contact (7) sont agencée sous la forme de contacta à couteaux ou sous la forme d'une zone de serrage pour un contact à ressort.

6. Unité électrique centrale selon l'une des revendications 1 à 5, **caractérisée en ce que** le bottier (1) comprend une barrette en matière plastique, dans laquelle au moins un fil de raccordement est monté de telle sorte que l'une de ses extrémités est en contact avec l'un des éléments de contact (7) et que son autre extrémité est positionnée approximativement dans le même plan que le au moins un conducteur plat (5) réalisé sous la forme d'une broche à souder et est fixée par brasage, comme ce conducteur, à la plaquette à circuits imprimée (3).
